(19)

Europäisches
Patentamt
European
Patent Office
Office européen
des brevets

(11) **EP 3 099 058 A1**

(12) **EUROPEAN PATENT APPLICATION**

(43) Date of publication:
**30.11.2016  Bulletin 2016/48**

(51) Int Cl.:
*H04N 5/235* (2006.01)    *H04N 5/913* (2006.01)

(21) Application number: **15305786.4**

(22) Date of filing: **26.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Chupeau, Bertrand**
  **35576 Cesson-Sévigné Cedex (FR)**
• **Baudry, Séverine**
  **35576 Cesson-Sévigné Cedex (FR)**

(74) Representative: **Perrot, Sébastien**
**TECHNICOLOR**
**1-5, rue Jeanne d'Arc**
**92130 Issy-les-Moulineaux (FR)**

(54) **METHOD FOR DETECTING VIDEO RECAPTURE AND CORRESPONDING APPARATUS**

(57)    Detecting video recapture of an image rendered by an image rendering device in which light intensity is controlled through periodic variation of the light intensity of a light source. Video recapture is detected through detection of light source flicker caused by frequency aliasing. A signal is extracted from a set of video frames captured by a video recording device, wherein the extracted signal is representative of luminance variation in the set of video frames. The extracted signal is Fourier transformed. Peak amplitudes are detected in the Fourier transformed extracted signal, and a video recapture of a video rendered by an image rendering device in which light intensity is controlled through periodic variation of the light intensity of a light source is detected responsive to the detected peak amplitudes.

Fig. 5

**EP 3 099 058 A1**

**Description**

**1. Technical field.**

The present disclosure generally relates to the field of video recording and in particular to video recording of a video displayed through an image rendering device that uses a technology where light intensity is controlled by periodic variation of the light intensity of a light source.

**2. Technical background.**

Persistence of vision in the human visual system is the retention of a series of light images appearing in rapid succession, and of a short, temporal duration, such that they seem to be in fluid, continuous motion. While the range of persistence varies from one individual to the next and is dependent on the brightness of the image, on the average the duration ranges between 1/24 second and 1/30 second.

Image rendering devices such as based on LCD (Liquid Cristal Displays), DLP (Digital Light Processing) and PMOLED (Passive Matrix Organic Light Emitting Diode) technology use PWM (Pulse Width Modulation) to control image brightness. PWM is an example of a technology that allows light intensity to be controlled through periodic variation of the light intensity of a light source. LCDs have become a dominant display type and as such, persistence in these devices is particularly interesting. LCDs typically employ a so-called backlight system that illuminates the LCD panel; consequently, LCDs are referred to as backlit displays. The LCD backlight light source is switched on and off with a PWM frequency that is not visible to the human eye due to the previously mentioned retinal persistence. DLPs are based upon a DMD (Digital Micromirror Device™, a trade mark of Texas Instruments Inc.). Light intensities from the DMD light source are produced by PWM of the micromirrors. DLP based display technology is used in a wide range of digital imaging applications, ranging from pico projectors to cinema projectors. For PMOLED displays, a PWM constant current is provided to the OLED pixels light source.

When recording with a video recording device an image displayed by means of an image rendering device that uses a technology that allows light intensity to be controlled through periodic variation of the light intensity of a light source such as through PWM, flickering artefacts may occur in the recording due to the camcorder's image sampling frequency and the light source periodic variation of light intensity such as a PWM frequency of the image rendering device creating frequency aliasing.

There is thus a need to improve prior techniques.

**3. Summary.**

The present disclosure aims at alleviating some of the inconveniences of prior art.

To this end, the present principles comprise a method of detecting, in a digital video recording device, video recapture of video images displayed through an image rendering device in which light intensity is controlled through periodic variation of a light intensity of a light source. The method comprises extracting a signal from a set of video frames captured by the digital video recording device from the light source, representative of luminance variation in the set of video frames; frequency transforming the extracted signal into the Fourier domain, to obtain a frequency transformed signal; detecting peak amplitudes in the frequency transformed signal; and detecting video recapture responsive to the detected peak amplitudes..

According to a variant embodiment of the method of detecting video recapture, the video recapture is detected when the detected peak amplitudes are above a noise threshold.

According to a variant embodiment of the method of detecting video recapture, the method further comprises, prior to the extracting, setting a shutter speed of the digital video recording device to a minimum value Tmin; measuring a maximum luminance of a captured image Lmax; and if the measured maximum luminance Lmax is lower than a luminance threshold TL, setting the shutter speed to Tmin * TL / Lmax.

According to a variant embodiment of the method of detecting video recapture, the extracting comprises from each video frame in the set of video frames, selecting at least one line of pixels and averaging luminance values of pixels in the selected at least one line; and repeating the selecting and averaging until all video frames of the set of video frames that are processed, to obtain the signal representative of luminance variation in the set of video frames.

According to a variant embodiment of the method of detecting video recapture, further comprising estimating a light source frequency of the image rendering device, the estimating of the light source frequency comprising measuring a frequency of the peak amplitudes, to obtain an aliasing frequency; adding to the aliasing frequency a value corresponding to a multiple of an image capturing frequency of the digital video recording device, thereby obtaining a candidate estimate of the light source frequency of the image rendering device; setting the shutter speed of the digital video recording device to multiple of a period corresponding to the candidate estimate; and executing the extracting, the frequency transforming and the detecting of the peak amplitudes, wherein, if no peak amplitude is detected at the output of the detecting of the peak amplitudes, the candidate estimate corresponds to the light source frequency of the image rendering device.

According to a variant embodiment of the method of detecting video recapture, the method further comprises adjusting the shutter speed of the digital video recording device to an integer multiple of an inverse of the estimated light source frequency, wherein flickering or aliasing is reduced.

According to a variant embodiment of the method of detecting video recapture, the method further comprises adjusting the shutter speed of the digital video recording device to be a non-integer multiple of an inverse of the estimated light source frequency, wherein flickering or aliasing is produced or enhanced.

According to a variant embodiment of the method of detecting video recapture, the light source frequency is a Pulse Width Modulation frequency.

According to a variant embodiment of the method of detecting video recapture, the image rendering device is one of a Liquid Crystal Display device; a Digital Light Processing device; or a Passive-Matrix Organic Light-Emitting Diode device.

According to a variant embodiment of the method of detecting video recapture, wherein the digital video recording device is a digital camcorder or a mobile phone.

The present disclosure also relates to an arrangement for a digital video recording device for detecting video recapture of images displayed through an image rendering device in which light intensity is controlled through periodic variation of a light intensity of a light source, the arrangement comprising a signal extractor configured to extract a signal from a set of video frames captured by the digital video recording device from the image rendering device, representative of luminance variation in the set of successive video frames; a frequency transformer configured to frequency transform the extracted signal into the Fourier domain, to obtain an frequency transformed signal; and a peak amplitude detector configured to detect peak amplitudes in the frequency transformed signal that are above a noise threshold.

According to a variant embodiment of the arrangement, the arrangement further comprises a shutter speed controller configured to set a shutter speed of the digital video recording device to a minimum value Tmin; a luminance measuring arrangement configured to measure a maximum luminance of a captured image Lmax; and the shutter speed controller being further configured to set the shutter speed to Tmin * TL / Lmax if the measured maximum luminance Lmax is lower than a luminance threshold TL.

According to a variant embodiment of the arrangement, the signal extractor further comprises a pixel line selector, configured to select, from each video frame in the set of video frames, at least one line of pixels and configured to average luminance values of pixels in the selected at least one line; and the pixel line selector being further configured to repeat the selecting and averaging until all video frames of the set of video frames are processed, to obtain the signal representative of luminance variation in the set of video frames.

According to a variant embodiment of the arrangement, the arrangement further comprises a light source frequency estimator comprising a peak amplitude frequency measuring arrangement configured to measure a frequency of the peak amplitudes, and to obtain an aliasing frequency; a frequency adder, configured to add to the aliasing frequency a value corresponding to a multiple of an image capturing frequency of the digital video recording device, and to obtain a candidate estimate of the light source frequency of the image rendering device; and the shutter speed controller being further configured to set the shutter speed of the digital video recording device to multiple of a period corresponding to the candidate estimate.

According to a variant embodiment of the arrangement, the shutter speed controller is further configured to adjust the shutter speed of the digital video recording device to an integer multiple of an inverse of the estimated light source frequency, for reduced flickering or aliasing.

According to a variant embodiment of the arrangement, the shutter speed controller is further configured to adjust the shutter speed of the digital video recording device to be a non-integer multiple of an inverse of the estimated light source frequency, for enhanced flickering.

According to a variant embodiment of the arrangement, the image rendering device is one of a Liquid Crystal Display device; a Digital Light Processing device; or a Passive-Matrix Organic Light-Emitting Diode device.

The present principles also relate to a digital video recording device comprising the arrangement according to the previous embodiments, wherein the digital video recording device is a digital camcorder or a mobile phone.

### 4. List of figures.

More advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring of the disclosure.

The exemplary embodiments will be described with reference to the following figures:

**Figure 1** is an example of brightness control of an image rendering device that uses a technology that allows light intensity to be controlled through periodic variation of light intensity of a light source (here: PWM) to control brightness.

**Figure 2** is a diagram illustrating flickering artefacts being introduced in a video recording device when capturing images of the image rendering device that uses a technology where brightness is controlled by periodic variation of the light intensity of a light source.

**Figure 3** is an example device (a video camcorder) implementing an arrangement according to the present principles.

**Figure 4** is an example arrangement of a recapture detector according to the present principles.

**Figure 5** is a flow chart of an embodiment of a method according to the present principles.

### 5. Detailed description.

As mentioned in the background section, flickering artefacts occur when an image, displayed through an image rendering device that uses a technology where brightness or light intensity is controlled by periodic variation of the light intensity of a light source, is recorded with a video recording device. For example and as mentioned in the background section, brightness or 'light intensity' of an LCD is controlled by switching the LCD's backlight light source on and off using a so-called Pulse Width Modulation (PWM) technique, but DLP projectors and PMOLED displays also use PWM to control light intensity. In the following and to illustrate the present principles, an example is given of the recapturing of an image displayed on an LCD and brightness control using PWM. The present principles however equally apply to other image rendering devices such as DLP projectors and PMOLED displays and more generally to any technology where light intensity is controlled by periodic variation of the light intensity of a light source, i.e. the present principles apply to recapture of images displayed through image rendering devices that use a technology where light intensity is controlled by periodic variation of the light intensity of a light source. This comprises for example the switching on and off of a backlight light source of an LCD, the changing of the pixel mirror position of a DMD light source in a DLP projector and the on and off switching of OLED pixels light source in a PMOLED display.

Now considering the example of a backlit LCD, a typical LCD backlight system is constituted of white LEDs light sources. The PWM is a rather crude method for controlling the white LED brightness as it is basically turns them fully on or fully off. Regulated continuous current variation for controlling the brightness of the white LEDs constituting the backlight system has been tested but has been proven unsuccessfully as the current variation of white LEDs results in undesirable variation of color temperatures. The above mentioned flickering artefacts are caused by the relatively high-frequency on-off switching of the backlight light source of the LCD, typically around 200 Hz, being recorded with a relatively low-frequency image sampling frequency, also referred to as image frame rate, expressed in Hz or 'fps' (frames per second), typically between 24 and 60 Hz or fps.

The image integration period or exposure time of an image recording device such as a camcorder is commonly referred to as 'shutter speed', where the term 'shutter' is inherited from analog image recording devices. In the following, the term 'shutter speed' will be used. Shutter speed and exposure time are equivalent terms. Shutter speed is the time the shutter remains open, usually expressed in 1/n seconds: a fast shutter speed means a short integration period or short exposure time. While the image frame rate is generally fixed (e.g. 24 images/second), the shutter speed is made variable (e.g. 1/10s to 1/1000s), to allow adapting the duration of exposure of the capturing device (e.g. a CCD for Charge-Coupled Device) to the luminosity of the image that is received by it. The periodicity of shutter opening is thus determined by the image frame rate, while the delay between opening and closing is thus determined by the shutter speed.

If the backlight light source of the LCD and the shutter speed of the camcorder are not synchronized ("synchronized" means here that the shutter speed is an integer multiple of the backlight light source period), different image frames of the video recording are associated to different sections of the backlight light source signal, and the average luminance of the recorded images varies in the recording periodically at a frequency $f_{alias}$ given by the aliasing of the relatively high-frequency $f_{lightsource}$ backlight light source signal by the relatively low frequency $f_{camcord}$ of the image frame acquisition according to:

$$\exists k \in \mathbb{N}, \ f_{alias} = \left| f_{lightsource} - k.f_{camcord} \right| < \frac{f_{camcord}}{2} \qquad (1)$$

Wherein $f_{alias}$ is the aliasing frequency of the flicker in the images recorded by the camcorder, $f_{lightsource}$ is the LCD backlight frequency (or in general, the light source frequency or light source *intensity variation* frequency), and $f_{camcord}$ is the camcorder's image frame acquisition frequency, expressed for example in Hz or fps.

Given equation (1), a special case of $f_{lightsource}$ being an integer multiple of $f_{camcord}$ appears (e.g. $f_{lightsource}$ = 200Hz, $f_{camcord}$ = 25Hz), for which the aliasing frequency $f_{alias}$ is null. This means that when a recording is made of a video shown on the LCD, by a camcorder and the LCD's backlight light source frequency (fixed) is an integer multiple of the camcorder's frame acquisition frequency (fixed), there is no observable flicker in the recorded video. In this particular case, changing the shutter speed would not increase or decrease a flicker artefact because there is none. The present principles thus apply to the more general case where the (LCD backlight -) light source frequency is not an integer multiple of the camcorder sampling frequency (e.g. $f_{lightsource}$ = 200Hz and $f_{camcord}$ = 29.97Hz; which are commonly used values), which creates a flickering effect in the recaptured video that depends on the shutter speed.

Most camcorders commercially sold nowadays use CMOS sensors and a rolling shutter. In contrast with global shutters that acquire a whole frame at once, a rolling shutter sequentially captures each frame line-per-line e.g. from top to bottom. When video recording video images shown on an LCD, via a DLP projector or a PMOLED display with a rolling-shutter camcorder, this yields a typical spatial-temporal aliasing pattern of dark/bright stripes scrolling up/down in the captured video.

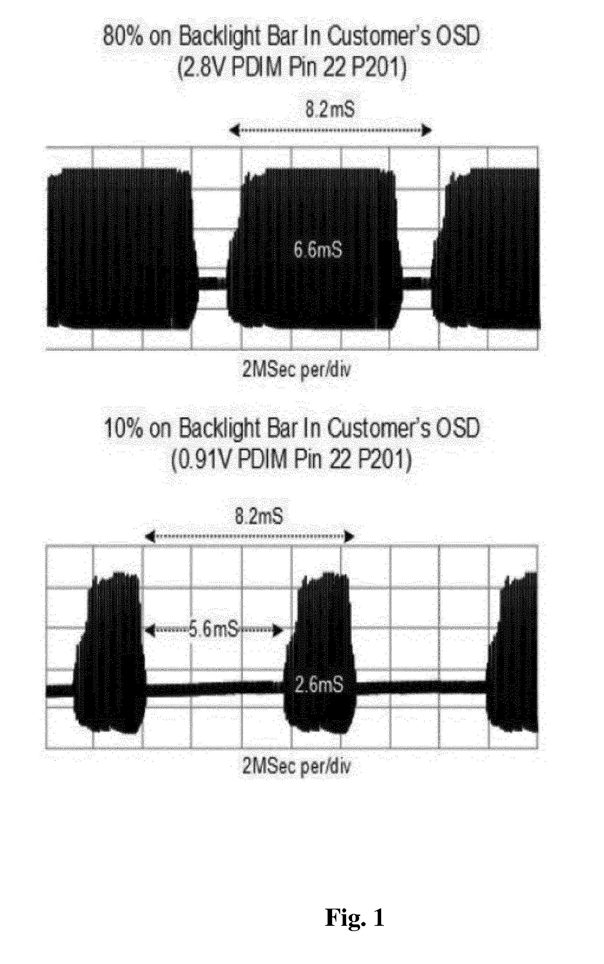

**Figure 1** is an example of brightness control of an image rendering device that uses a technology that allows light intensity to be controlled through periodic variation of the light intensity of a light source (here: PWM) to control brightness. The top image is representative of a 120Hz PWM pulse resulting in relatively high brightness. The bottom image is representative of a PWM pulse of a same frequency resulting in relatively low brightness.

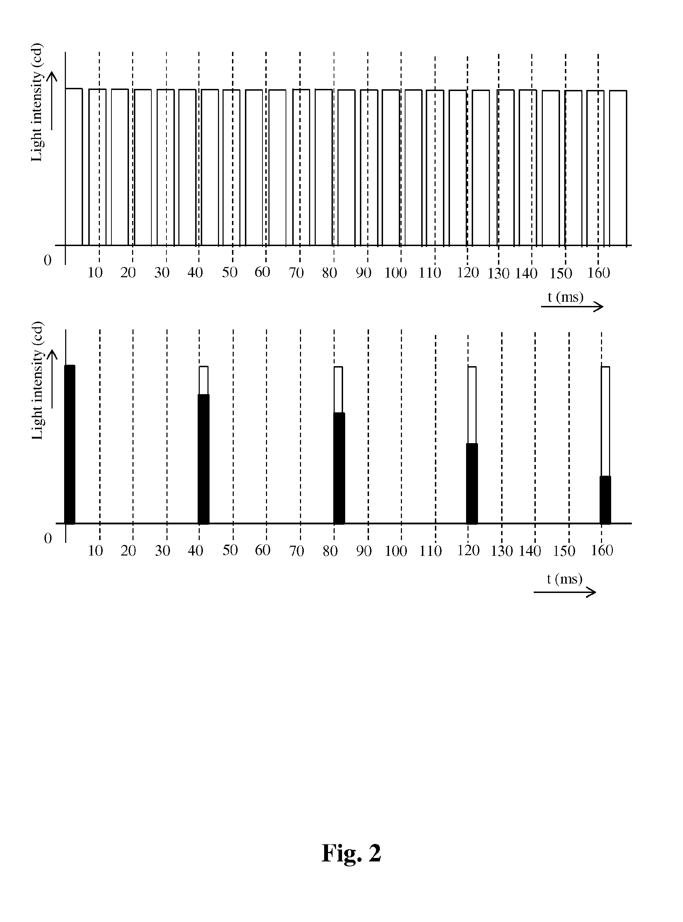

**Figure 2** is a diagram illustrating flickering artefacts being introduced in a video recording device when capturing images of the image rendering device that uses a technology where brightness is controlled by periodic variation of the light intensity of a light source. The top graph represents light pulses as emitted by the image rendering device, e.g. by the backlight LEDs light source of an LCD display, by the mirrors of a DMD light source of a DLP projector, or by the OLED pixels light source of a PMOLED display; approximately every 7ms as in the example of Figure 1. The bottom graph represents light captured by the CCD in a digital camcorder. According to this example, an image sample with a duration of about 2ms is taken every 40ms, corresponding to an image frame rate of 25 frames per second. The black fill level in each of the samples in the bottom graph represents the amount of light captured by the CCD for each sample. As can be observed, the amount of light captured by the CCD varies over the samples, since the digital camcorder's shutter speed is not synchronized with the light source frequency. For various purposes it is interesting to synchronize or rather to desynchronize the digital camcorder's shutter speed with the periodic variation of the light intensity of the light source (e.g. the LCD backlight period). Synchronizing is interesting for quality improvement of the recording done by the digital camcorder. Desynchronizing is interesting for copy protection, making correct recapture of images displayed on the image rendering device that uses a technology where brightness is controlled by periodic variation of the light intensity of a light source impossible.

The present principles can be implemented in a digital camcorder device. During video capture, a recapture detector according to the present principles analyzes a set of video frames. The video recapture detector controls the camcorder's shutter speed. A slow shutter speed, and thus a long exposure time, behaves like a temporal low-pass filter before re-sampling, thus reducing aliasing artifacts. On the other hand, a fast shutter speed, and thus a short exposure time, increases the flickering effect as the shorter the integration period, the more variation between the amount of light from the light source is integrated over successive frames. A good compromise when setting such a fast shutter speed value to maximize flickering is between one half and one quarter of the typical period of the light source signal (e.g. between 1/400 and 1/800 for a typical LCD backlight light source frequency of 200 Hz) as faster speeds would decrease the total amount of light reaching the sensor too much. In order to maximize any flickering effect caused by frequency aliasing, the video recapture detector sets the shutter speed to a high value during a detection phase. As the measured luminance $L$ on the recording device sensors is proportional to the shutter speed $t$, i.e. $L = \lambda tI$ with lambda being a constant depending on the other recording device settings (e.g. ISO sensitivity, aperture, etc.), and/or the camcorded scene average illuminance, to accurately estimate the flicker, the measured luminance should be large enough, e.g. $L$ should be greater than a predetermined threshold $T_L$. For instance, $T_L$ is equal to 100 (if luminance is coded on 8 bits, i.e. $T_L$ would be in between 0 and 255). A typical procedure to set the optimal shutter speed according to the present principles is the following:

- set the shutter speed to the minimal value $t_{min}$ available in the camcorder (e.g. 1/1000s);
- measure the maximal luminance $L_{Max}$ of the captured image;
- if $L_{Max} < T_L$, then increase the shutter speed to $t = t_{min} T_L/L_{Max}$

The presence of flickering is then detected by temporal frequency analysis of the set of video frames in the following steps:

1. extracting a one-dimensional temporal signal from the set of video frames (1D TL extraction, where TL stands for Time-Luminance; for example, by capturing a single global video frame luminance value for each of the video frames);

2. frequency transforming into the Fourier domain of the extracted temporal signal (FFT transform);

3. detecting peak amplitudes in the mid-to high frequency range, to filter frequencies that are caused by the light source flickering (e.g. LCD backlight flickering, DLP DMD flickering of the projected image, or OLED pixel flickering of a PMOLED display), wherein a typical peak search range excludes for example 10% of the lowest luminance variation frequencies observed in the set of video frames so as to remove peaks in these frequencies and avoid confusing them with the aliasing peaks;

4. comparing the detected peak amplitudes with a predefined threshold (e.g. x times the standard deviation of the FFT signal to ensure to be above the noise level), to discard spurious peaks and keep peaks due to the aliasing of the light source (e.g. the LCD, DLP or PMOLED PWM);

5. if peaks are detected that are above the predefined threshold, it is concluded that a recapture of images displayed on an image rendering device using a technology that allows light intensity to be controlled through periodic variation of the light intensity of a light source is ongoing.

According to equation (1) the light source frequency (e.g. the LCD backlight on-off switching frequency, the DLP DMD mirror switching frequency or the PMOLED OLED pixel on-off switching frequency) can now be estimated: knowing $f_{camcord}$ and $f_{alias}$, the pairs $(k, f_{lightsource})$ which satisfy the equality ($k$ is an integer) are determined:

$$f_{lightsource} = \pm f_{alias} + k \cdot f_{camcord} \qquad (2)$$

In order to sort out the real light source frequency ($f_{lightsource}$) among the multiple solutions according to equation (2): first, those frequencies outside the range of plausible light source frequencies (i.e. [100Hz, 1000Hz]) are discarded. Then, for each remaining plausible frequency solution and a given candidate frequency, the shutter speed is set to a multiple of the period corresponding to the candidate frequency and the previous flickering detection steps 1 to 2 are repeated and a verification is performed to determining if a peak occurs or does not occur at $f_{alias}$ (i. e. step 3 and 4 applied at frequency $f_{alias}$ only). Among those candidate estimated light source frequencies, the one for which no aliasing peak is detected at the output of step 4 is the right light source frequency estimate.

When the light source frequency is estimated, the recapture detector can set the shutter speed to an integer multiple of the estimated light source period to reduce or suppress the flicker effect for improving the video recording quality, or alternatively or in contrast, the recapture detector can set the shutter speed to a non-integer multiple to increase the flicker effect for copy protection purposes. When setting the shutter speed to an integer multiple of estimated light source period, the integer multiple can be chosen to be coherent with respect to luminosity and motion of a captured scene, which are constraints normally managed by camcorders.

According to a variant embodiment, the first step of extracting the one-dimensional temporal signal from the set of video frames is done according to the following steps:

1.1 selecting a video segment of $2^n$ video frames;

1.2 for each video frame in the video segment, selecting a line of pixels, e.g. the middle line representing the image center, to avoid selecting a line that is not capturing the image rendering device;

1.3 averaging, for the pixels in each selected line, their luminance values, to obtain an average luminance value;

1.4 repeating 1.2 to 1.3 until all $2^n$ video frames are processed, to obtain a $2^n$-long signal of average luminance values.

According to a further variant embodiment, the first and second steps of extracting the one-dimensional temporal signal from the set of video frames and transforming it into a one-dimensional signal in the Fourier domain is done according to the following steps:

1.1 selecting a video segment of $2^n$ video frames;

1.2 for each video frame in the segment, selecting m lines of pixels;

1.3 for each video frame, averaging the luminance values for each m lines, to obtain an average luminance value;

1.4 repeating 1.2 to 1.3 until all $2^n$ video frames are processed, to obtain m $2^n$-long signal of average luminance values;

2.1 computing a Fast Fourier Transform (FFT) of the m $2^n$-long signals and keeping the m magnitude components of this FFT signals;

2.2 averaging the m FFT magnitude signals obtained in the previous step, to obtain a single FFT magnitude signal.

While the first variant embodiment has an advantage to be relatively simple to implement, the second embodiment has the advantage to give a more precise estimation of the frequency peaks and therefore a more robust detection of image rendering device recapture, resulting in lesser false detections with a more precise estimation of light source frequency.

According to a variant embodiment, once the estimation of the backlight frequency is obtained, a control loop fine tunes the camcorders shutter time to reduce the flicker effect to a minimum, if the objective of the flicker detection is to improve the video recording quality.

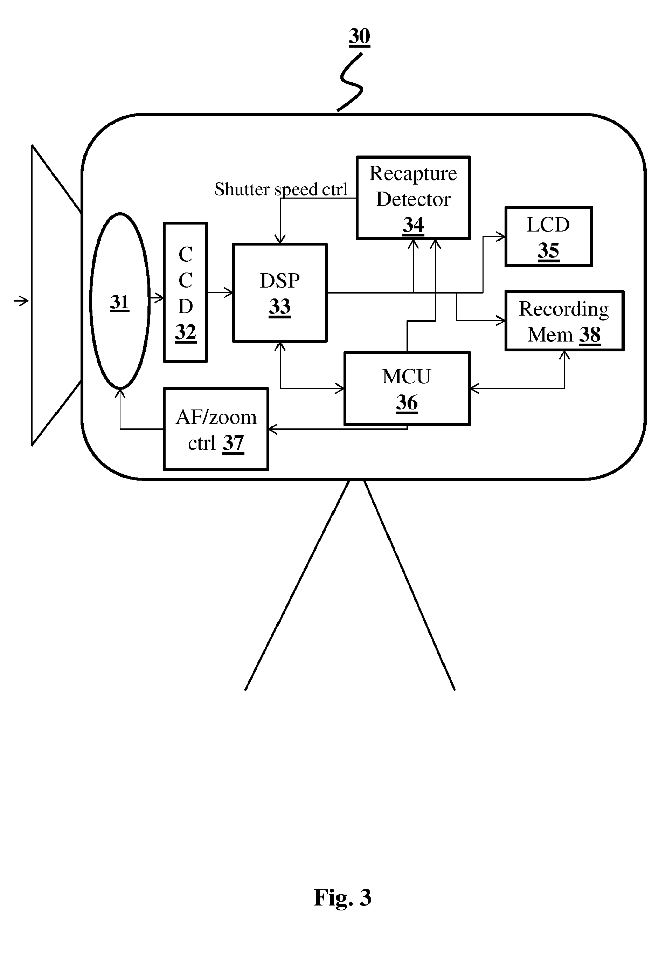

**Figure 3** is an example video recording device such as a video camcorder implementing an arrangement according to the present principles. The device 30 comprises:

- a lens 31;
- an image capturing device such as a CCD 32;
- a digital signal processor (DSP) 33;
- a micro control unit (MCU), central processing unit (CPU) or processor 36;
- an auto focus/zoom motor control unit 37;
- an LCD 35;
- a recording memory 38; and
- a recapture detector unit 34.

Light generally represented by an arrow is received by the camera lens 31. Auto focus and zoom motors of the lens 31 are controlled by a control unit 37 that receives instructions from microcontroller 36. The light received by the camera lens is captured by image capturing device 32, where the light is transformed in electrical signals. The electrical signals from the image capturing device 32 are received by the digital signal processor 33. The latter processes the electrical signals received from image capturing device 32 to transform these in a series of digital images that are stored in recording memory 38, and shown on built-in LCD 35. The MCU 36 drives all these elements to provide the function of video recording. The video recapture detector 34 according to the present principles implements the previously described steps 1-6. For this purpose, it receives digital images from the DSP 35 and controls the shutter speed.

Other examples of devices in which the present principles can be applied are a smartphone or a tablet device with a built-in camera.

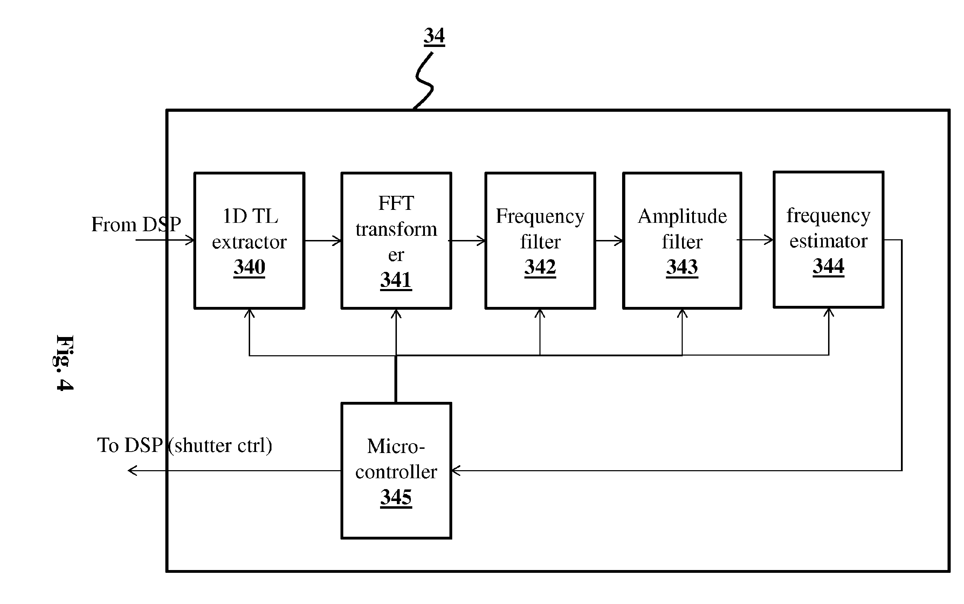

**Figure 4** is an example arrangement of a recapture detector according to the present principles. Digital video images are received by the one dimensional temporal signal extractor 340 (i.e. the 1D TL extractor), e.g. from the DSP 33 of Figure 3. The extracted one dimensional temporal signal is fed into Fourier transformer 341, where the signal is transformed into a frequency-time signal, decomposing the signal output by the 1D TL extractor into the frequencies that are comprised in the signal. The output of the FFT transformer is fed into frequency filter 342, which discards FFT values corresponding to lowest frequencies that are caused by the displayed video content itself with frequencies that are caused by light source flickering, and which lets other local maxima (peaks) in the magnitude of the FFT values to pass. The output of the frequency filter 342 is fed to amplitude filter 343, which only retains peaks that are above a noise threshold (e.g. twice or three times the standard deviation of the signal) in order to distinguish peaks caused by light source flickering from noise. The output of the amplitude filter is fed to the light source frequency estimator 344. The light source frequency estimator receives the frequencies that are output from the amplitude filter (if any), which correspond to alias frequencies caused by the interference between the image sampling frequency and the light source frequency. Based on equation (1), the light source frequency estimator can obtain the light source frequency from the alias frequency. The output of the light source frequency estimator is fed to microcontroller 345 that controls the shutter speed of the DSP. After an initial estimation wherein the shutter speed is set to a value that is typically between a half and a quarter of the period of a typical light source signal in order to better estimate light source flickering through the frequency aliasing effect, the estimation output of the light source frequency estimator can be used by the microcontroller to adjust the DSP shutter speed, so that it is for example an integer multiple of the light source period if the objective is to improve the recording quality, or alternatively or in contrast, a non-integer multiple of the light source period if the objective is to impair the video recapture for the purpose of copy protection.

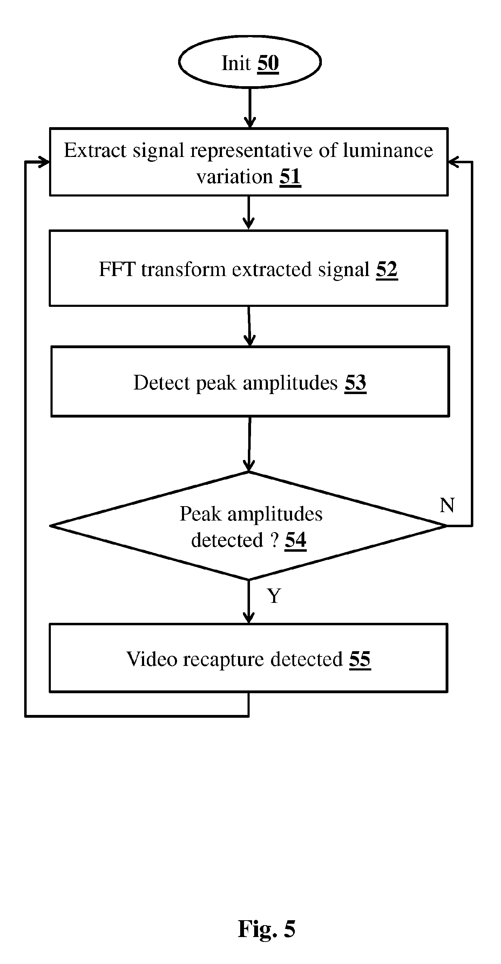

**Figure 5** is a flow chart of an embodiment of a method according to the present principles. In a first step 50, any variables and memory space are initialized that are used during execution of the method. In a step 51, a signal is extracted from a set of video frames captured by the digital video recording device. This signal is representative of the luminance variation in the set of video frames. In a step 52, the extracted signal is frequency transformed into the Fourier domain (=FFT transform), resulting in a frequency transformed signal. In a step 53, peak amplitudes are detected in the frequency transformed signal that are above a noise threshold. In a step 54, if peak amplitudes are detected that are above the noise threshold, a video recapture of an image rendering device in which light intensity is controlled through periodic variation of the light intensity of a light source is detected.

Some elements in the drawings may not be used or be necessary in all embodiments. Some operations may be executed in parallel. Variant embodiments other than those illustrated and/or described are possible.

The present principles can be applied to any technology where light intensity is controlled by periodic variation of the light intensity of a light source. Therefore, the $f_{lightsource}$ used in equations and in this description is equally the backlight switching frequency of an LCD, the mirror position changing frequency of a DLP projector's DMD used for light intensity control, or the switching frequency of OLED pixels of a PMOLED display.

The present principles can be integrated in a digital video camera or camcorder, stand alone or integrated in a mobile device such as a mobile phone or smartphone, and in general can be implemented in any device where detection of video recapturing is wished or required.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

**Claims**

1. A method of detecting, in a digital video recording device, video recapture of video images displayed through an image rendering device in which light intensity is controlled through periodic variation of a light intensity of a light source, **characterized in that** the method comprises:

   extracting (51) a signal from a set of video frames captured by the digital video recording device from the light source, representative of luminance variation in the set of video frames;
   frequency transforming (52) the extracted signal into the Fourier domain, to obtain a frequency transformed signal;
   detecting (53, 54) peak amplitudes in the frequency transformed signal; and
   detecting (55) video recapture responsive to the detected peak amplitudes.

2. The method according to claim 1, wherein the video recapture is detected when the detected peak amplitudes are above a noise threshold.

3. The method according to claim 1 or 2, further comprising:

   prior to the extracting, setting a shutter speed of the digital video recording device to a minimum value Tmin;
   measuring a maximum luminance of a captured image Lmax; and
   if said measured maximum luminance Lmax is lower than a luminance threshold TL, setting the shutter speed to Tmin * TL / Lmax.

4. The method according to any of claims 1 to 3, wherein the extracting comprises:

   from each video frame in the set of video frames, selecting at least one line of pixels and averaging luminance values of pixels in the selected at least one line; and
   repeating the selecting and averaging until all video frames of the set of video frames that are processed, to obtain the signal representative of luminance variation in the set of video frames.

5. The method according to any of claims 1 to 4, further comprising estimating a light source frequency of said image rendering device according to the following:

   measuring a frequency of said peak amplitudes, to obtain an aliasing frequency;
   adding to the aliasing frequency a value corresponding to a multiple of an image capturing frequency of the digital video recording device, thereby obtaining a candidate estimate of the light source frequency of the image rendering device;
   setting the shutter speed of said digital video recording device to multiple of a period corresponding to said candidate estimate; and
   executing the extracting, the frequency transforming and the detecting of the peak amplitudes, wherein, if no peak amplitude is detected at the output of the detecting of the peak amplitudes, the candidate estimate corresponds to the light source frequency of the image rendering device.

6. The method according to claim 5, further comprising adjusting the shutter speed of said digital video recording device to an integer multiple of an inverse of said estimated light source frequency, wherein flickering or aliasing is reduced.

7. The method according to claim 5, further comprising adjusting the shutter speed of said digital video recording device to be a non-integer multiple of an inverse of said estimated light source frequency, wherein flickering or aliasing is produced or enhanced.

8. The method according to any of claims 1 to 7, wherein the light source frequency is a Pulse Width Modulation frequency.

9. The method according to any of claims 1 to 8, wherein the image rendering device is one of:

   a Liquid Crystal Display device;
   a Digital Light Processing device; or
   a Passive-Matrix Organic Light-Emitting Diode device.

10. The method according to any of the previous claims, wherein the digital video recording device is one of:

    a digital camcorder; or
    a mobile phone.

11. An arrangement (34) for a digital video recording device (30) for detecting video recapture of images displayed through an image rendering device in which light intensity is controlled through periodic variation of a light intensity of a light source, the arrangement comprising:

    a signal extractor (340) configured to extract a signal from a set of video frames captured by the digital video recording device from the image rendering device, representative of luminance variation in the set of successive video frames;
    a frequency transformer (341) configured to frequency transform the extracted signal into the Fourier domain, to obtain an frequency transformed signal; and
    a peak amplitude detector (342-344) configured to detect peak amplitudes in the frequency transformed signal that are above a noise threshold.

12. The arrangement according to claim 11, further comprising:

    a shutter speed controller (345) configured to set a shutter speed of the digital video recording device to a minimum value Tmin;
    a luminance measuring arrangement configured to measure a maximum luminance of a captured image Lmax; and
    said shutter speed controller being further configured to set the shutter speed to Tmin * TL / Lmax if said measured maximum luminance Lmax is lower than a luminance threshold TL.

**13.** The arrangement according to Claim 11 or 12, wherein the signal extractor further comprises:

a pixel line selector, configured to select, from each video frame in the set of video frames, at least one line of pixels and configured to average luminance values of pixels in the selected at least one line; and
said pixel line selector being further configured to repeat the selecting and averaging until all video frames of the set of video frames are processed, to obtain the signal representative of luminance variation in the set of video frames.

**14.** The arrangement according to any of Claims 11 to 13, further comprising a light source frequency estimator comprising:

a peak amplitude frequency measuring arrangement configured to measure a frequency of said peak amplitudes, and to obtain an aliasing frequency;
a frequency adder, configured to add to the aliasing frequency a value corresponding to a multiple of an image capturing frequency of the digital video recording device, and to obtain a candidate estimate of the light source frequency of the image rendering device; and
the shutter speed controller being further configured to set the shutter speed of said digital video recording device to multiple of a period corresponding to said candidate estimate.

**15.** The arrangement according to Claim 12, wherein said shutter speed controller is further configured to adjust the shutter speed of said digital video recording device to an integer multiple of an inverse of said estimated light source frequency, for reduced flickering or aliasing.

**16.** The arrangement according to Claim 12, wherein said shutter speed controller is further configured to adjust the shutter speed of said digital video recording device to be a non-integer multiple of an inverse of said estimated light source frequency, for enhanced flickering.

**17.** The arrangement according to any of claims 11 to 16, wherein the image rendering device is one of:

a Liquid Crystal Display device;
a Digital Light Processing device; or
a Passive-Matrix Organic Light-Emitting Diode device.

**18.** A digital video recording device comprising the arrangement according to any of claims 11 to 17, wherein the digital video recording device is one of:

a digital camcorder; or
a mobile phone.

Fig. 1

**Fig. 2**

**Fig. 3**

**Fig. 4**

Init **50**

Extract signal representative of luminance variation **51**

FFT transform extracted signal **52**

Detect peak amplitudes **53**

Peak amplitudes detected ? **54**

N

Y

Video recapture detected **55**

**Fig. 5**

**Europäisches Patentamt**
**European Patent Office**
**Office européen des brevets**

# EUROPEAN SEARCH REPORT

Application Number

EP 15 30 5786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEVERINE BAUDRY ET AL: "Modeling the flicker effect in camcorded videos to improve watermark robustness", 2014 IEEE INTERNATIONAL WORKSHOP ON INFORMATION FORENSICS AND SECURITY (WIFS), 1 December 2014 (2014-12-01), pages 42-47, XP055202214, DOI: 10.1109/WIFS.2014.7084301 ISBN: 978-1-47-998882-2 * abstract * * page 42 - page 46 * | 1-18 | INV. H04N5/235 H04N5/913 |
| A | US 2013/342726 A1 (EBINA YUKI [JP] ET AL) 26 December 2013 (2013-12-26) * abstract * * paragraph [0002] - paragraph [0013] * * paragraph [0033] * * figures 1-6 * | 1-18 | |
| A | US 2012/081570 A1 (HSIEH HONG-YEH [TW]) 5 April 2012 (2012-04-05) * abstract * * paragraph [0006] - paragraph [0009] * * paragraph [0017] - paragraph [0018] * * figures 1A-5 * | 1-18 | TECHNICAL FIELDS SEARCHED (IPC) H04N |
| A | EP 2 790 399 A1 (SONY CORP [JP]) 15 October 2014 (2014-10-15) * abstract * * paragraph [0002] * * paragraph [0030] * * paragraph [0104] * * figure 1- * | 1-18 | |

The present search report has been drawn up for all claims

| Place of search | Date of completion of the search | Examiner |
|---|---|---|
| Munich | 15 July 2015 | Schreib, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 15 30 5786

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2015

| Patent document cited in search report | | Publication date | Patent family member(s) | | Publication date |
|---|---|---|---|---|---|
| US 2013342726 | A1 | 26-12-2013 | CN | 103516975 A | 15-01-2014 |
| | | | JP | 2014003548 A | 09-01-2014 |
| | | | US | 2013342726 A1 | 26-12-2013 |
| US 2012081570 | A1 | 05-04-2012 | CN | 102256062 A | 23-11-2011 |
| | | | CN | 102427510 A | 25-04-2012 |
| | | | US | 2012081570 A1 | 05-04-2012 |
| EP 2790399 | A1 | 15-10-2014 | CN | 103975578 A | 06-08-2014 |
| | | | EP | 2790399 A1 | 15-10-2014 |
| | | | JP | 2013121099 A | 17-06-2013 |
| | | | US | 2014375848 A1 | 25-12-2014 |
| | | | WO | 2013084605 A1 | 13-06-2013 |

EPO FORM P0459

For more details about this annex : see Official Journal of the European Patent Office, No. 12/82